# EUROPEAN PATENT SPECIFICATION

(11) **EP 2 196 417 B1**
(45) Date of publication and mention of the grant of the patent: **28.09.2011**
(21) Application number: 09178722.6
(22) Date of filing: 10.12.2009
(51) Int. Cl.: B65G 47/14

(54) **Apparatus for orienting items, more particularly caps.**
Vorrichtung zum orientieren von Gegenständen, insbesondere von Verschlusskappen
Dispositif pour orienter des objets, notamment des bouchons

(30) Priority: 10.12.2008 IT TO20080920
(43) Date of publication of application: 16.06.2010
(73) Proprietor: CTech S.r.l., 14042 Calamandrana (AT) (IT)
(72) Inventor: Bottero, Roberto, 14053, Canelli (AT) (IT); Caporaso, Roberto, 14053, Canelli (AT) (IT); Parise, Juri, 14053, Canelli (AT) (IT)
(74) Representative: Robba, Pierpaolo

(56) References cited:
- DE-A1- 10 341 481
- DE-C- 508 470
- US-A- 3 835 985

## Description

### Technical Field

The present invention relates to an apparatus for orienting items, more particularly caps. More in detail, the present invention relates to an apparatus for orienting items, more particularly caps, provided with an improved ejecting device.

### Prior Art

Apparatuses for orienting items are known wherein said items are picked from a hopper in which said items are provided in bulk and they are fed to a device that allows to obtain at its outlet items all oriented in the same way.

Said apparatuses are particularly employed in the bottling lines for the orienting of caps, such as plastic caps, crown stoppers and the like.

According to the prior art, the device for orienting caps substantially comprises a conveyor belt provided with vanes arranged perpendicular to the surface of the belt itself, said conveyor belt passing through the hopper containing the items to be oriented and then following a rising, substantially vertical path: the items are drawn from the hopper by means of the perpendicular vanes and, in the rising portion of the conveyor belt, they lay upon said vanes, which serve as supporting bases; the arrangement of the conveyor belt and the shape and size of the vanes are chosen so that only the items that are correctly oriented maintain a stable equilibrium on said vanes and continue their rising path on said conveyor belt, while the items that are not correctly oriented fall in the hopper below. In such way, at the end of the rising portion of the conveyor belt, only the items that are correctly oriented are still on said belt.

At this stage, the items that are correctly oriented are ejected and directed to the following stations of the production line, for instance to a bottling station when said items are caps. Apparatuses for orienting items of the kind disclosed above are known, for instance from documents WO 2006/045927, US 5,394,972, US 5,586,637.

In the known devices, the ejection of the items at the end of the rising portion of the conveyor belt is carried out thanks to the utilization of a pneumatic system, which allows to create a jet of pressurized fluid (e.g. air) for pushing the items sideways out from the conveyor belt, towards means for conveying said items to the following station of the production line.

Such an ejecting system is affected by evident drawbacks.

First of all, the need of coupling a pneumatic system to the apparatus for orienting items considerably increases the complexity thereof and, as a consequence, increases the likelihood of failures and malfunctions.

Furthermore, in general pneumatic systems are affected by a considerable inertia. Accordingly, at each interruption of the apparatus operation a non-negligible transient time is needed before arriving to a complete stop; analogously, at each following start of the apparatus, a non-negligible transient time is needed before reaching a steady operation. Moreover, in case of failures or malfunctions affecting work stations provided downstream of the apparatus for orienting items and involving the need of stopping the whole production line, the inertia of the pneumatic system can easily lead to an accumulation of items at the ejecting device and to a clog of the apparatus.

US 3 835 985 discloses an apparatus in accordance with the preamble of claim 1, for separating randomly oriented cans according to their orientation. Such apparatus comprises a hopper wherein the cans are randomly oriented, a conveyor having a rising portion and adapted for separating the cans according to their orientation and an ejecting device for ejecting the cans form the apparatus, said ejecting device comprising a sloping surface on which the can advance.

DE 508 470 analogously discloses an apparatus for separating according to their orientation workpieces having a rounded edge on one side and a sharp edge on the other side.

DE 103 41 481 discloses a sorter for bottle stoppers, especially crown corks and suchlike, comprising a hopper to hold unsorted corks, a belt conveyor rising vertically at an angle from the hopper and a collecting device connected to the belt conveyor in its upper region.

The main object of the present invention is to provide an apparatus for orienting items, more particularly caps, that is free from the drawbacks affecting prior art apparatuses and that allows to eject the items that are correctly oriented in an easy and reliable way. Another object of the present invention is to provide an apparatus for orienting items that is able to adjust itself to any variation in the advancing speed of the production line as well as to any stop of said line without the risk of causing clogs.

A further object of the invention is to provide an apparatus for orienting items that can be manufactured easily and with reduced costs.

The above and other objects are achieved by the apparatus for orienting items as claimed in the appended claims.

### Disclosure of the invention

Thanks to the fact that in the apparatus according to the invention items are ejected by falling, i.e. by sole effect of gravity, the ejecting device has no inertia and it is free from risks of failure and malfunctions.

Thanks to the fact that the ejecting device comprises, close to the duct for conveying the items to the following stations of the production line, a duct for expelling items out from the ejection device itself, the risk of accumulations and clogs is avoided in the apparatus according to the invention.

According to a preferred embodiment of the invention, the ejection device is provided aligned to the rising portion of the conveyor belt and behind it, so that the overall size of the apparatus according to the invention is particularly limited.

### Brief Description of the Drawings

Advantages and features if the invention will be turn to be particularly clear from the following description of some preferred embodiments of the invention, given by way of non-limiting example, with reference to the attached drawings, wherein:
- Figure 1 is a schematic side view of the apparatus for orienting items according to the invention;
- Figure 2 is an enlarged side view of the detail II of the apparatus of Figure 1;
- Figure 3 is an enlarged front view of the detail III of the apparatus of Figure 1;
- Figure 4 is an enlarged side view of the detail IV of the apparatus of Figure 1;
- Figure 5 is a schematic front view of the ejecting device of the apparatus of Figure 1 according to a first embodiment of the invention;
- Figure 6 is a schematic front view of the ejecting device of the apparatus of Figure 1 according to a second embodiment of the invention.

### Description of Preferred Embodiments

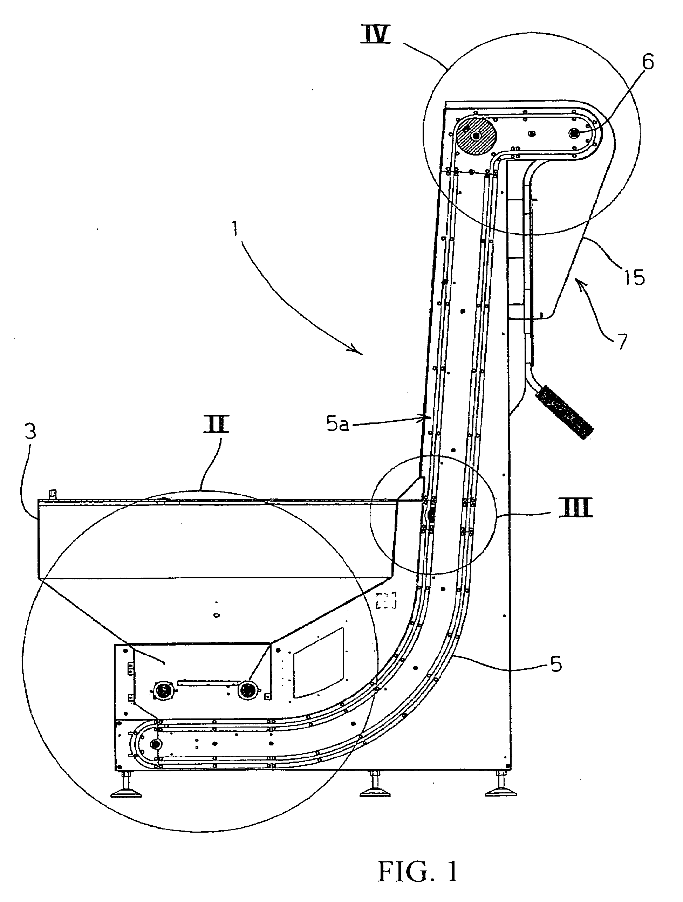

With reference to Figures 1 - 5, the invention will be disclosed below with reference to an apparatus 1 for orienting caps T, more particularly plastic caps of cylindrical shape, closed at one of their bases.

In Figure 1 the apparatus 1 for orienting caps T is shown in its entirety. Said apparatus 1 comprises a hopper 3 in which the caps T are provided in bulk, a conveyor belt 5, driven by a pinion shaft 6, which draws the caps from the hopper 3 and which comprises a rising portion 5a for selecting the caps that are correctly oriented and an ejecting device 7, arranged downstream of the rising portion 5a of the conveyor belt 5, that provides to the ejection of the caps from the apparatus 1 and conveys them towards the following stations of the production line.

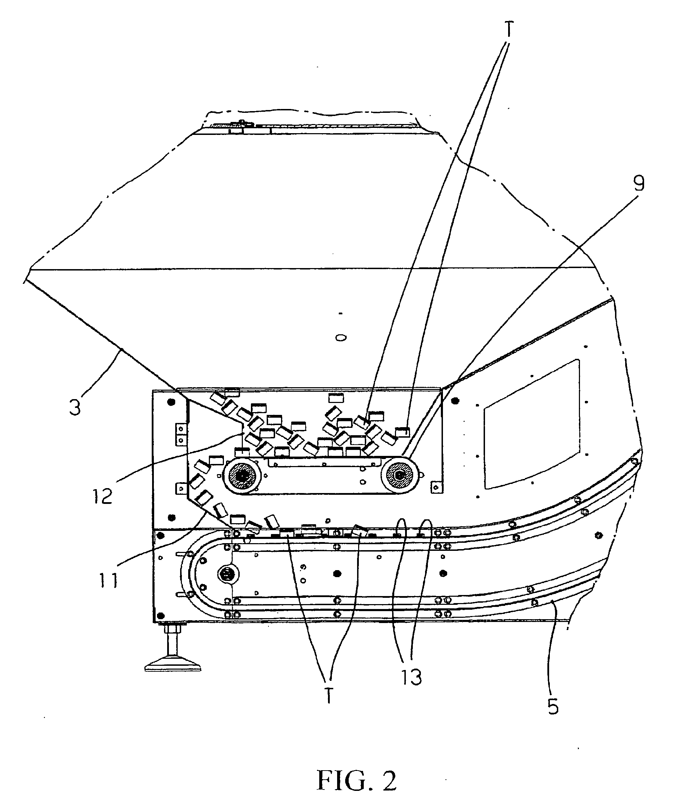

With particular reference to Figure 2, on the bottom of the hopper 3 wherein the caps T are provided in bulk, an endless belt 9 is provided, which advances continuously and at a constant speed and which draws the caps T towards a chute I leading to the conveyor belt 5 below. Thanks to the presence of a movable bulkhead 12, the flow of the caps T coming out from the hopper 3 can be adjusted.

The conveyor belt 5 is provided with a plurality of transverse vanes 13, perpendicular to the surface of the belt itself and having substantially the same length of said belt, so that the caps T coming from the chute 11 are led to be placed on the belt 5, in seats defined by two consecutive vanes 13.

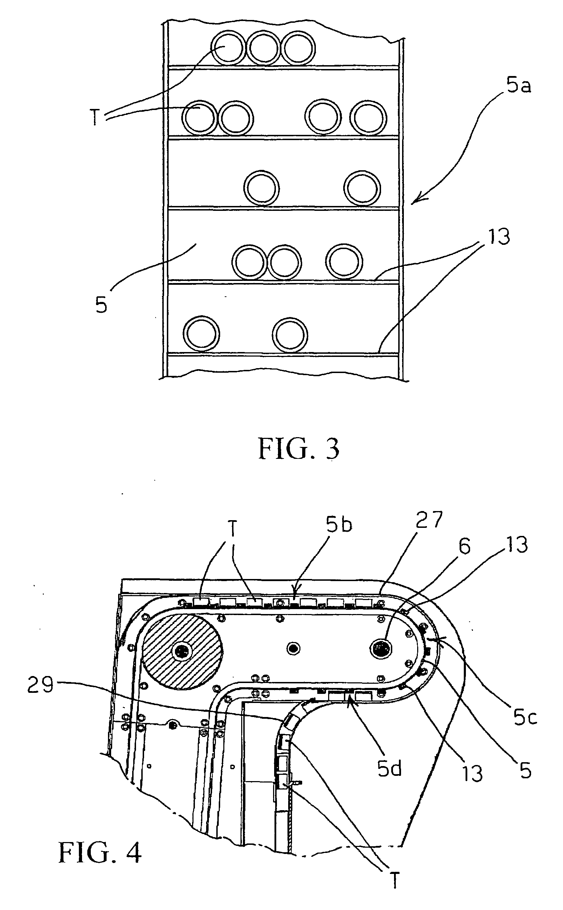

With reference now to Figure 3, after having drawn the caps T, the conveyor belt 5 comprises a rising portion 5a, allowing to select the caps T that are correctly oriented.

In the rising portion 5a of the conveyor belt 5, only the caps T the centre of gravity of which is closer to the surface of the belt 5 continue their path, resting on the underlying vane 13; on the contrary, the caps the centre of gravity of which is farther from the surface of the belt 5 fall down in the hopper 3 by effect of gravity.

More particularly, in case of plastic caps having a cylindrical shape and closed at one of their bases, only the caps having their closed base resting against the belt 5 have their centre of gravity close enough to the belt 5 for passing the selection; all the other caps fall down in the hopper 3.

In this way, at the end of the rising portion 5a of the conveyor belt 5, only caps.T all having the same orientation are still present on said conveyor belt 5.

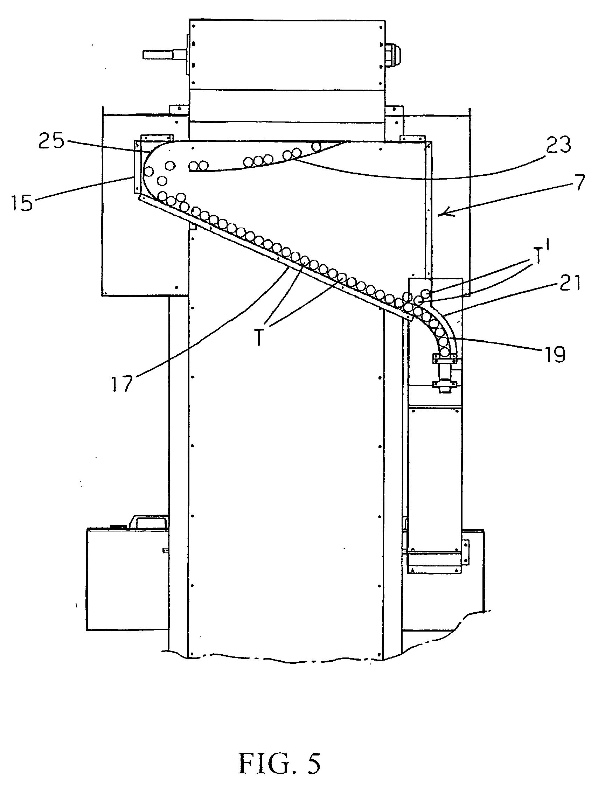

At the end of said rising portion 5a of the conveyor belt 5, the ejecting device 7, schematically shown in Figure 5, is provided.

According to the invention, the ejection of the caps T from the apparatus 1 takes place solely by effect of gravity, without the intervention of any pneumatic device.

The ejection device 7 includes a casing comprising a first wall and a second wall, opposite to and facing said first wall, these walls defining therebetween a hollow space wherein the caps T, correctly oriented, can fall at the end of the rising portion 5a of the conveyor belt 5.

In the simplest embodiment of the invention, a sloping surface 17 is provided in the casing 15, between said first and second wall, on which surface the caps T fall and roll towards an outlet duct 19, so that they can be conveyed to the following stations of the production line.

On the sloping surface 17, an endless belt advancing towards the opening of the outlet duct 19 can be optionally provided, so as to make the falling of the caps towards said duct easier.

The size of the outlet duct 19 is advantageously chosen so that its width is substantially equal to the diameter of the caps T, whereby said caps enter said outlet duct aligned in a single line.

Advantageously, in order to avoid clogs if the caps are stacked in several superimposed lines on the sloping surface 17, an expulsion duct 21 is arranged close to the outlet duct 19 and above said duct, the caps T' possibly stacked on the caps entering the outlet duct 19 being expelled out from the casing 15 through said expulsion duct 21.

Preferably, the expulsion duct 21 is arranged so as to lead the caps T' to fall again into the hopper 3.

Furthermore, above the outlet duct 19 or the expulsion duct 21, a sensor - for instance an optical sensor - can be provided for signalling an accumulation of caps inside the casing 15 and for possibly controlling the stop of the advancing of the conveyor belt 5.

According to the above description, thanks to the invention a single line of caps T, all correctly oriented, can be obtained at the outlet of the ejecting device 7, in a simple and cost-saving way, without any inertia and any transient time and without the risk of failures or malfunctions.

In order to optimize the ejection of caps T and facilitate the arrangement of said caps on a single line on the sloping surface 17, the caps arriving from the conveyor belt fall on an inclined chute 23, instead of falling directly on the sloping surface 17, said inclined chute being also arranged in the hollow space defined between the first and second wall of the casing 15 and being inclined in an opposite direction with respect to said sloping surface 17.

The inclined chute 23 co-operates with a concave return surface 25 which is provided opposite to the lower end of said chute and which addresses again the caps T towards the sloping surface 17 and the outlet duct 19.

Experimental tests have proved that, by appropriately choosing the size and the inclination of the inclined chute 23, as well as the curvature of the return surface 25 and its distance from the inclined chute 23 itself, it is possible to facilitate the arrangement of the caps T on the sloping surface 17 in a single line, thus reducing the number of caps that are excluded from the following path of the production line through the expulsion duct 21.

It is evident that the optimum size, shape and disposition of the sloping surface 17, of the inclined chute 23 and of the return surface 25 depend on the type of the items that are oriented by the apparatus 1, namely on the size and weight of such items.

It is also evident that, even if in the preferred embodiment shown in Figure 5 only one inclined chute 23 is provided, it is also possible to provide one or more additional chutes. Analogously, instead of providing only one sloping surface 17 and a corresponding outlet duct 19, it is possible to provide one or more additional sloping surfaces, each leading to a corresponding additional outlet duct, connected to a respective work station.

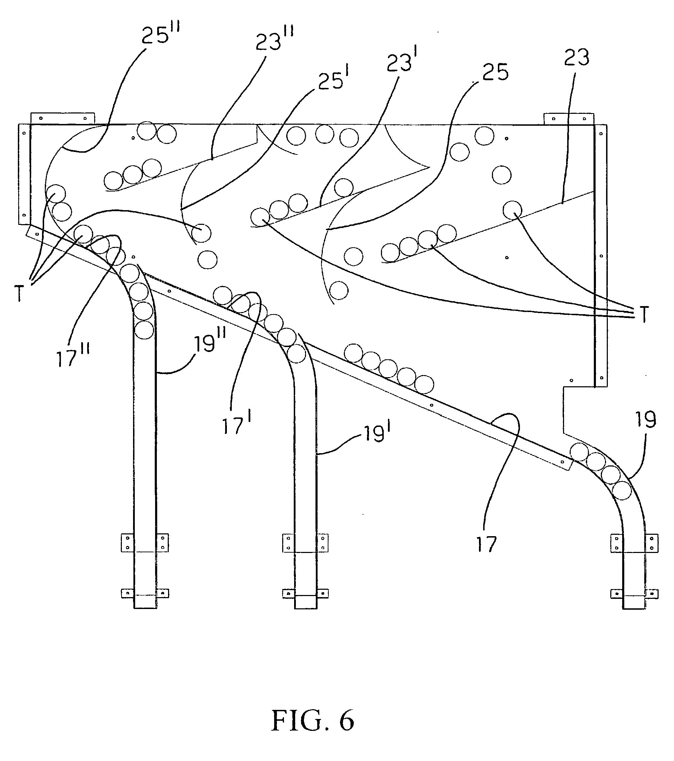

In this respect, a second preferred embodiment is shown in Figure 6, wherein additional sloping surfaces, as well as corresponding additional inclined chutes, are provided.

According to this second embodiment, the casing 15 is structured in such way that, in addition to the sloping surface 17 leading to the outlet duct 19, a first 17' and second 17" additional sloping surfaces are provided, respectively leading to a first 19' and second 19" additional outlet ducts.

In Figure 6, the additional sloping surfaces 17',17" are arranged aligned with the sloping surface 17; nevertheless, it is evident that other arrangements can be provided, for instance arranging the additional sloping surfaces offset with respect to the sloping surface 17. Always referring to Figure 6, in addition to the inclined chute 23, a first 23' and second 23" additional inclined chutes are provided, each co-operating with a corresponding return surface 25',25" for addressing again the caps towards the inclined surface 17,17',17" below and the corresponding outlet ducts 19,19',19".

In an apparatus comprising an ejecting device of the type shown in Figure 6, the caps T coming from the conveyor belt 5 will fall inside the casing 15 and, depending on their position on said conveyor belt, they will be intercepted by one of the inclined chutes 23,23',23", and then addressed again towards a sloping surface 17,17',17" thanks to the respective return surface 25,25',25".

The provision of multiple sloping surfaces and outlet ducts can be advantageous in those applications where a plurality of similar stations arranged in parallel are provided downstream of the apparatus for orienting items or where it is desirable to increase the number of items per unit of time that can be oriented and conveyed to the following stations of the production line.

Referring now to Figure 4, a preferred embodiment of the connecting portion that allows the caps T to pass from the top of the rising portion 5a of the conveyor belt 5 to the ejecting device 7 is shown.

According to this embodiment, a substantially horizontal portion 5b is provided after the rising portion 5a of the conveyor belt 5.

Starting from said horizontal portion, the apparatus 1 comprises a restraining case 27, arranged parallel to the conveyor belt 5 and following its contour, at a distance from said belt that is sufficiently small to prevent them from coming out from their seats.

A 'U'-shaped portion 5c is provided after the horizontal portion 5b, so that at the end of said 'U'-shaped portion the caps T, instead of resting on the conveyor belt 5, rest on the restraining case 27 and they are drawn thereon by the vanes 13.

A second horizontal portion 5d is provided after the 'U'-shaped portion 5c. At said second horizontal portion, a fall funnel 29 departs from said restraining case 27, so that the caps T, no longer constrained by the vanes 13, enter said funnel and fall into the casing 15 of the ejecting device 7, namely into the hollow space between said first and second wall of said casing 15, as shown in Figure 5 and disclosed above.

It is evident that any kind of connecting portion allowing the caps T to fall inside said casing of said ejecting device while maintaining the correct orientation can also be employed.

However, it is to be noted that thanks to a connecting portion of the kind described above, it is possible to arrange the ejecting device 7 substantially aligned with the rising portion 5a of the conveyor belt 5 and behind it, so that the apparatus I is considerably compact and its overall size is limited.

In general, it is evident that the embodiment described in detail and shown in the Figures is given by way of example only, and that several modifications and variants are possible, without departing from the scope of protection of the present invention as claimed in the appended claims.

## Claims

1. Apparatus (1) for orienting items comprising
- a hopper (3), wherein said items are provided in bulk;
- a conveyor belt (5), provided with a plurality of transversal vanes (13) arranged perpendicular to the conveyor belt surface for drawing said items from said hopper (3), said conveyor belt having a rising portion (5a) suitable for selecting the items having a pre-established orientation, so that at the end of said rising portion (5a) of said conveyor belt (5) only the items all having said pre-established orientation stay on said conveyor belt (5); and
- an ejecting device (7), provided downstream of this rising portion (5a) of said conveyor belt (5) for ejecting said items from said apparatus (1);
said ejecting device (7) including a casing (15) comprising a first wall and a second wall opposite to and facing said first wall, these walls defining therebetween a hollow space wherein a sloping surface (17) is provided, onto which said items coming from said conveyor belt (5) fall because of the gravity force and roll or slide towards an outlet duct (19) arranged at the end of said sloping surface, **characterized in that** in said hollow space of said casing (15), above said sloping surface (17), at least an inclined chute (23) is provided, said chute being inclined in the opposite direction with respect to said sloping surface (17), so that said items fall because of the gravity force at first onto said inclined chute (23).

2. Apparatus (1) for orienting items according to claim 1, wherein the size of said outlet duct (19) is chosen so that the width of said outlet duct is substantially equal to the size of said items, so that said items enter said outlet duct (19) aligned in a single line.

3. Apparatus (1) for orienting items according to claim 2, wherein a discharge duct (21) is provided close to said outlet duct (19) and arranged above it, the items possibly stacked on said single line being discharged from said casing (15) through said discharge duct (21).

4. Apparatus (1) for orienting items according to claim 1, wherein in said hollow space of said casing (15) one or more additional sloping surfaces (17',17") are provided, an additional outlet duct (19',19") being provided at the end of each additional sloping surface.

5. Apparatus (1) for orienting items according to claim 1, wherein between said inclined chute (23) and said sloping surface (17) a concave return surface (25) is arranged opposite to the lower end of said chute (23) so as to address again said items towards said sloping surface (17).

6. Apparatus (1) for orienting items according to claim 1, wherein one or more additional inclined chutes (23',23") are provided in said hollow space of said casing (15), above said sloping surface (17).

7. Apparatus (1) for orienting items according to any of the preceding claims, wherein said casing (15) of said ejecting device (7) is arranged aligned with said rising portion (5a) of said conveyor belt (5) and behind it.

8. Apparatus (1) for orienting items according to any of the preceding claims, wherein a connecting portion is provided between said rising portion (5) of said conveyor belt (5) and said casing of said ejecting device (7), said connecting portion comprising:
- a first horizontal portion (5b) of said conveyor belt (5);
- a 'U'-shaped portion (5c) of said conveyor belt (5);
- a second horizontal portion (5c) of said conveyor belt;
a restraining case (27) being arranged parallel to said first horizontal portion (5b), to said 'U'-shaped portion (5c) and to said second horizontal portion (5c) of said conveyor belt (5), at a distance from said conveyor belt small enough to avoid variations in position or orientation of said items advancing on said conveyor belt, a fall funnel (29) departing from said restraining case (27) at said second horizontal portion (5c) of said conveyor belt and being connected to said hollow space of said casing (15) of said ejecting device (7).

9. Apparatus (1) for orienting items according to any of the preceding claims, wherein said items are caps.

## Patentansprüche

1. Vorrichtung (1) zum Ausrichten von Gegenständen umfassend
- einen Trichter (3), in dem die Gegenstände als Schüttgut vorhanden sind;
- ein Förderband (5), das mit mehreren Querschaufeln (13) ausgestattet ist, die zum Herausziehen der Gegenstände aus dem Trichter (3) senkrecht zur Oberfläche des Förderbands angeordnet sind, wobei das Förderband einen ansteigenden Abschnitt (5a) aufweist, der zum Auswählen der Gegenstände, die eine vorbestimmte Ausrichtung haben, geeignet ist, sodass am Ende des ansteigenden Abschnitts (5a) des Förderbands (5) nur die Gegenstände mit der vorbestimmten Ausrichtung auf dem Förderband (5) verbleiben; und
- eine Auswurfvorrichtung(7), die zum Auswerfen der Gegenstände aus der Vorrichtung (1) stromabwärts des ansteigenden Abschnitts (5a) des Förderbands (5) angeordnet ist;
wobei die Auswurfvorrichtung (7) ein Gehäuse (15) aufweist, das eine erste Wand und eine zweite Wand, die der ersten Wand gegenüber steht und ihr zugewandt ist, aufweist, wobei diese Wände zwischen sich einen Hohlraum definieren, in welchem sich eine geneigte Fläche (17) befindet, auf welche die von dem Förderband (5) kommenden Gegenstände wegen der Schwerkraft fallen und dann zu einer am Ende der geneigten Fläche angeordneten Austrittleitung (19) rollen oder rutschen, **dadurch gekennzeichnet,**
**dass** in dem Hohlraum des Gehäuses (15) oberhalb der geneigten Fläche (17) wenigstens eine abfallende Schurre (23) ausgebildet ist, wobei die Schurre im Verhältnis zu der abfallenden Fläche (17) in der entgegengesetzten Richtung geneigt ist, sodass die Gegenstände wegen der Schwerkraft zuerst auf der geneigten Schurre (23) fallen.

2. Vorrichtung (1) zum Ausrichten von Gegenständen nach Anspruch 1, wobei die Größe der Austrittleitung (19) so gewählt ist, dass die Breite der Austrittleitung im wesentlichen mit der Größe der Gegenstände übereinstimmt, so dass die Gegenstände in einer Einzelreihe ausgerichtet in die Austrittleitung (19) gelangen.

3. Vorrichtung (1) zum Ausrichten von Gegenständen gemäß Anspruch 2, wobei nahe an und oberhalb von der Austrittleitung (19) eine Ablaufleitung (21) angeordnet ist, wobei eventuell auf der Einzelreihe liegende Gegenstände durch diese Ablaufleitung (21) aus dem Gehäuse (15) abgeführt werden.

4. Vorrichtung (1) zum Ausrichten von Gegenständen nach Anspruch 1, wobei im Hohlraum des Gehäuses (15) eine oder mehrere zusätzliche geneigte Flächen (17', 17") vorgesehen sind und eine zusätzliche Austrittleitung (19', 19") am Ende jeder zusätzlichen geneigten Fläche angeordnet ist.

5. Vorrichtung (1) zum Ausrichten von Gegenständen nach Anspruch 1, wobei zwischen der geneigten Schurre (23) und der geneigten Fläche (17) eine konkave Rückführfläche (25) entgegengesetzt von dem unteren Ende der Schurre (23) angebracht ist, um die Gegenstände wieder zu der geneigten Fläche (17) hin zuführen.

6. Vorrichtung (1) zum Ausrichten von Gegenständen nach Anspruch 1, wobei im Hohlraum des Gehäuses (15) eine oder mehrere zusätzlichen abfallende Schurren (23', 23") oberhalb der Schrägoberfläche (17) vorgesehen sind.

7. Vorrichtung (1) zum Ausrichten von Gegenständen nach einem der vorhergehenden Ansprüche, wobei das Gehäuse (15) der Auswurfvorrichtung (7) fluchtend mit dem ansteigenden Abschnitt (5a) des Förderbands (5) und hinter diesem angebracht ist.

8. Vorrichtung (1) zum Ausrichten von Gegenständen nach einem der vorhergehenden Ansprüche, wobei ein Verbindungsabschnitt zwischen dem ansteigenden Abschnitt (5) des Förderbands (5) und dem Gehäuse der Auswurfvorrichtung (7) ausgebildet ist und der Verbindungsabschnitt die folgenden Teile umfasst:
- einen ersten waagerechten Abschnitt (5b) des Förderbands (5);
- einen 'U'-formigen Abschnitt (5c) des Förderbands (5);
- einen zweiten waagerechten Abschnitt (5b) des Förderbands (5);
ein Führungsgehäuse (27), das parallel zu dem ersten waagerechten Abschnitt (5b), zu dem 'U'-formigen Abschnitt (5c) und zu dem zweiten waagerechten Abschnitt (5c) des Förderbands (5) in einem hinreichend kleinem Abstand von dem Förderband angeordnet ist, um Variationen in Lage oder Ausrichtung der sich auf dem Förderband fortbewegenden Gegenständen zu verhindern, einen Schütttrichter (29), der von dem Führungsgehäuse (27) an dem zweiten waagerechten Abschnitt (5c) des Förderbands ausgeht und mit dem Hohlraum des Gehäuses (15) der Auswurfvorrichtung (7) verbunden ist.

9. Vorrichtung (1) zum Ausrichten von Gegenständen nach einem der vorhergehenden Ansprüche, wobei die Gegenstände Kappen sind.

## Revendications

1. Dispositif (1) pour orienter des objets, comportant :
- une trémie (3) dans laquelle lesdits objets sont fournis en vrac ;
- une courroie transporteuse (5), dotée d'une pluralité d'ailettes transversales (13) disposées perpendiculairement à la surface de la courroie transporteuse pour prélever lesdits objets à partir de ladite trémie (3), ladite courroie transporteuse ayant une partie montante (5a) appropriée pour sélectionner les objets présentant une orientation préétablie, de sorte qu'au niveau de l'extrémité de ladite partie montante (5a) de ladite courroie transporteuse (5), seuls les objets présentant tous ladite orientation préétablie restent sur ladite courroie transporteuse (5) ; et
- un dispositif éjecteur (7), prévu en aval de cette partie montante (5a) de ladite courroie transporteuse (5) pour éjecter lesdits objets dudit dispositif (1) ;
ledit dispositif éjecteur (7) comportant un boîtier (15) comprenant une première paroi et une seconde paroi opposée, et faisant face, à ladite première paroi, ces parois définissant entre elles un espace creux dans lequel une surface en pente (17) est prévue, sur laquelle lesdits objets venant de ladite courroie transporteuse (5) tombent en raison de la force de gravité et roulent ou glissent vers une conduite de sortie (19) disposée au niveau de l'extrémité de ladite surface en pente, CHARACTERISE EN CE QUE
dans ledit espace creux dudit boîtier (15), au-dessus de ladite surface en pente (17), au moins une goulotte inclinée (23) est prévue, ladite goulotte étant inclinée dans la direction opposée par rapport à ladite surface en pente (17) de telle sorte que lesdits objets tombent, en raison de la force de gravité, d'abord sur ladite goulotte inclinée (23).

2. Dispositif (1) pour orienter des objets selon la revendication 1, dans lequel la dimension de ladite conduite de sortie (19) est choisie de façon que la largeur de ladite conduite de sortie soit essentiellement égale à la dimension desdits objets, de sorte que lesdits objets pénètrent dans ladite conduite de sortie (19) disposés en une seule ligne.

3. Dispositif (1) pour orienter des objets selon la revendication 2, dans lequel une conduite d'évacuation (21) est prévue à proximité de ladite conduite de sortie (19) et agencée au-dessus d'elle, les objets possiblement empilés sur ladite ligne unique étant évacués à partir dudit boîtier (15) à travers ladite conduite d'évacuation (21).

4. Dispositif (1) pour orienter des objets selon la revendication 1, dans lequel dans ledit espace creux dudit boîtier (15) une ou plusieurs surface(s) en pente supplémentaire(s) (17', 17") est (sont) prévue (s), une conduite de sortie supplémentaire (19', 19") étant prévue au niveau de l'extrémité de chaque surface en pente supplémentaire.

5. Dispositif (1) pour orienter des objets selon la revendication 1, dans lequel entre ladite goulotte inclinée (23) et ladite surface en pente (17) une surface de renvoi concave (25) est agencée à l'opposé de l'extrémité inférieure de ladite goulotte (23) de façon à adresser de nouveau lesdits objets vers ladite surface en pente (17).

6. Dispositif (1) pour orienter des objets selon la revendication 1, dans lequel une ou plusieurs goulotte(s) inclinée(s) supplémentaire(s) (23', 23") sont prévues dans ledit espace creux dudit boîtier (15), au-dessus de ladite surface en pente (17).

7. Dispositif (1) pour orienter des objets selon l'une quelconque des revendications précédentes, dans lequel ledit boîtier (15) dudit dispositif éjecteur (7) est disposé en alignement avec ladite partie montante (5a) de ladite courroie transporteuse (5) et derrière elle.

8. Dispositif (1) pour orienter des objets selon l'une quelconque des revendications précédentes, dans lequel une partie de raccordement est prévue entre ladite partie montante (5a) de ladite courroie transporteuse (5) et ledit boîtier dudit dispositif éjecteur (7), ladite partie de raccordement comprenant :
- une première partie horizontale (5b) de ladite courroie transporteuse (5) ;
- une partie configurée en forme de "U" (5c) de ladite courroie transporteuse (5) ;
- une seconde partie horizontale (5c) de ladite courroie transporteuse (5) ;
une enveloppe de retenue (27) étant agencée parallèlement à ladite première partie horizontale (5b), à ladite partie configurée en forme de "U" (5c) et à ladite seconde partie horizontale (5c) de ladite courroie transporteuse (5), à une distance de ladite courroie transporteuse suffisamment petite pour éviter des variations de position ou d'orientation desdits objets progressant sur ladite courroie transporteuse, un petit tuyau de chute (29) s'écartant de ladite enveloppe de retenue (27) au niveau de ladite seconde partie horizontale (5c) de ladite courroie transporteuse et étant raccordé au dit espace creux dudit boîtier (15) dudit dispositif éjecteur (7).

9. Dispositif (1) pour orienter des objets selon l'une quelconque des revendications précédentes, dans lequel lesdits objets sont des bouchons.
